# EUROPÄISCHE PATENTSCHRIFT

(11) **EP 0 960 040 B1**
(45) Veröffentlichungstag und Bekanntmachung des Hinweises auf die Patenterteilung: **04.09.2002**
(21) Anmeldenummer: 98907977.7
(22) Anmeldetag: 23.01.1998
(51) Int. Cl.: B60R 25/00

(54) **SICHERHEITSEINRICHTUNG FÜR EIN KRAFTFAHRZEUG**
AUTOMOBILE SECURITY DEVICE
SYSTEME DE SECURITE POUR VEHICULE AUTOMOBILE

(30) Priorität: 14.02.1997 DE 19705642
(43) Veröffentlichungstag der Anmeldung: 01.12.1999
(73) Patentinhaber: Siemens Aktiengesellschaft, 80333 München (DE)
(72) Erfinder: FALKENBERG, Andreas, D-61352 Bad Homburg (DE)
(86) Internationale Anmeldenummer: EP9800350
(87) Internationale Veröffentlichungsnummer: WO98035862

(56) Entgegenhaltungen:
- EP-A- 0 640 517
- WO-A-97/37096
- WO-A-98/28510
- AT-B- 395 998
- DE-C- 19 602 316
- FR-A- 2 707 692
- GB-A- 2 209 050
- JP-A- 6 255 450
- JP-A- 8 013 872
- US-A- 5 279 292

## Beschreibung

Die Erfindung betrifft eine Sicherheitseinrichtung für ein Kraftfahrzeug gemäß dem Oberbegriff des Patentanspruchs 1.

Derartige Sicherheitseinrichtungen, wie sie aus der GB 2 209 050 A bekannt sind, werden häufig in Form eines Schlüssels hergestellt, dessen Griff gleichzeitig als Gehäuse für die elektrischen Schaltungen dient. Zum Betätigen der Türen ist dabei meist eine Taste vorgesehen. Als Energiespeicher dient ein Akkumulator, eine Batterie oder ein Kondensator entsprechend hoher Kapazität. Die Zahl der Betätigungsvorgänge bis zum Wiederaufladen des Akkumulators bzw. des Kondensators oder bis zum Austauschen der Batterie ist daher begrenzt. Außerdem ist die Leistung der Energieübertragung zwischen Spule und Zündschloß und dem Schlüssel begrenzt, so daß nur ein geringer Ladestrom zur Verfügung steht.

Gemäß der GB 2 209 050 wird die Energie zwischen Empfänger und Sender über eine galvanische Kontakteinrichtung übertragen. Dabei ist der Sender solange nicht über eine am Sender angeordnete Taste einschaltbar, wie sich der Schlüssel im Zündschloß befindet, was zusätzliche Maßnahmen zur Detektion des Schlüssels erfordert.

Aufgabe der Erfindung ist es daher, im Falle von wiederaufladbaren Energiespeichern kurze Ladezeiten zu ermöglichen bzw. im Falle von Batterien die Lebensdauer jeweils einer Batterie zu erhöhen.

Diese Aufgabe wird erfindungsgemäß durch die Merkmale des Anspruchs 1 gelöst.

Mit der erfindungsgemäßen Maßnahme wird vermieden, daß beim Drehen des Schlüssels der Sender durch ein unabsichtliches Betätigen des Bedienelements in Betrieb genommen wird, was zu diesem Zeitpunkt ohnehin nicht sinnvoll ist.

Die erfindungsgemäße Sicherheitseinrichtung ist somit vorteilhaft und mit äußerst geringem Aufwand zu realisieren.

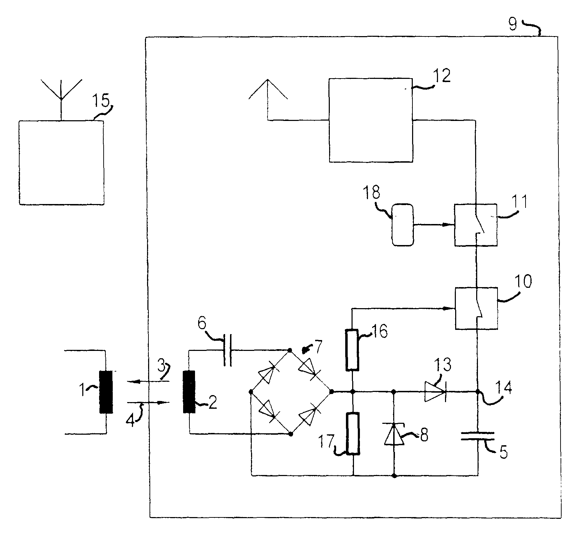

Die Erfindung läßt zahlreiche Ausführungsformen zu. Eine davon ist schematisch in der Zeichnung dargestellt und nachfolgend beschrieben.

Eine erste Spule 1 ist im Kraftfahrzeug am Zündschloß angeordnet und mit einer Einrichtung verbunden, die an sich bekannt ist und im Zusammenhang mit der vorliegenden Erfindung nicht näher erläutert zu werden braucht. Diese Einrichtung dient zur Auswertung des von der Spule 2 im Schlüssel in Richtung des Pfeils 3 übertragenen Code-Signals und erzeugt ferner Signale, die in Richtung 4 zum lediglich schematisch dargestellten Schlüssel 9 übertragen werden, und Wechselspannungsimpulse, welche zur Aufladung eines Energiespeichers 5 genutzt werden. Dazu bildet die zweite Spule 2 mit einem Kondensator 6 einen Serienschwingkreis. Die Spannung am Serienschwingkreis 2, 6 wird einem Gleichrichter 7 zugeleitet, an den sich ein von einer Z-Diode gebildeter Spannungsbegrenzer 8 anschließt.

Der als Kondensator dargestellte Energiespeicher ist über eine Schottky-Diode 13 an den Ausgang des ebenfalls von Schottky-Dioden gebildeten Gleichrichters 7 angeschlossen. Bei 14 kann die für den Betrieb des Fernbedienungssenders und gegebenenfalls weiterer Schaltungen erforderliche Energie entnommen werden.

An den Schaltungspunkt 14 ist über zwei in Reihe liegende Schalter 10, 11 ein Fernbedienungssender 12 angeschlossen. Die von dem Sender 12 ausgesandten Signale können von einem im Kraftfahrzeug angeordneten Empfänger 15 empfangen werden und dort nach entsprechender Demodulation und Decodierung zur Steuerung einer Zentralverriegelungsanlage zum Ver- und Entriegeln der Türen des Kraftfahrzeugs verwendet werden. Schalter 11 ist von einem schematisch dargestellten Bedienelement 18, vorzugsweise einer Drucktaste, betätigbar, während Schalter 10 von einer Schaltspannung gesteuert wird, die über einen Widerstand 16 vom Ausgang des Gleichrichters 7 zugeführt wird. Ein weiterer Widerstand 17 dient zur Entladung des Ausgangs des Gleichrichters 7 nach dem Ausbleiben der induzierten Spannung, wenn der Schlüssel 9 abgezogen wird.

Solange am Ausgang des Gleichrichters 7 und am Steuereingang des Schalters 10 Spannung anliegt, ist der Schalter 10 nichtleitend. Auch wenn Schalter 11 betätigt wird, wird dem Energiespeicher 5 keine Energie für den Sender 12 entnommen. Erst wenn der Schlüssel 9 abgezogen ist und keine Spannung mehr am Ausgang des Gleichrichters 7 liegt, wird der Schalter 10 in den leitenden Zustand gesteuert, so daß der Sender 12 eingeschaltet werden kann.

Weitere in dem lediglich schematisch dargestellten Schlüssel 9 befindliche Teile und Baugruppen, wie beispielsweise der Code-Sender (Transponder), sind in den Figuren nicht dargestellt.

## Patentansprüche

1. Sicherheitseinrichtung (9) für ein Kraftfahrzeug mit einem Sender (12) zur Türver- und Entriegelung und einer Einrichtung (1, 2) zur Übertragung von Daten und Energie zwischen einer im Kraftfahrzeug angeordneten Einrichtung (1) und der Sicherheitseinrichtung (9), wobei der Sender (12) über mindestens ein Bedienteil (18) schaltbar ist und zur Versorgung des Senders (12) ein Energiespeicher (5) in der Sicherheitseinrichtung (9) vorgesehen ist, wobei der Sender (12) nicht einschaltbar ist, wenn die Sicherheitseinrichtung (9) mit der im Kraftfahrzeug angeordneten Einrichtung (1) verbunden ist, wobei von einer zur Energieübertragung in die Sicherheitseinrichtung (9) dienenden Spannung eine Schaltspannung ableitbar ist, die ein Einschalten des Senders (12) verhindert, und wobei eine Aufladung des Energiespeichers (5) mit Hilfe der übertragenen Spannung erfolgt, **dadurch gekennzeichnet, daß** die im Kraftfahrzeug angeordnete Einrichtung eine erste Spule (1) und die Sicherheitseinrichtung (9) ein zweite Spule (2) umfaßt, wobei von einer zur Energieübertragung von der ersten Spule (1) in die zweite Spule (2) in diese induzierten Spannung die Schaltspannung abgeleitet ist, und wobei die zweite Spule (2) mit einem Kondensator (6) einen Serienschwingkreis bildet.

## Claims

1. Motor vehicle security device (9) having a transmitter (12) for locking and unlocking doors, and a device (1, 2) for transmitting data and energy between a device (1) arranged in the vehicle and the security device (9), it being possible to switch the transmitter (12) by means of at least one operator control (18) and an energy store (5) being provided in the security device (9) in order to supply the transmitter (12), it being impossible to switch on the transmitter (12) if the security device (9) is connected to the device (1) which is arranged.in the vehicle, it being possible to derive a switching voltage from a voltage which serves to transmit energy into the security device (9), said switching voltage preventing the transmitter (12) from being switched on and the energy store (5) being charged using the transmitted voltage, **characterized in that** the device which is arranged in the motor vehicle comprises a first coil (1), and the security device (9) comprises a second coil (2), the switching voltage being derived from a voltage which is induced in the second coil (2) in order to transmit energy from the first coil (1) into the second coil (2) and the second coil (2) forming, with a capacitor (6), an oscillatory series circuit.

## Revendications

1. Dispositif de sécurité (9) pour véhicule automobile, comprenant un émetteur (12) pour le verrouillage et le déverrouillage des portes et des moyens (1, 2) servant à transmettre des données et de l'énergie entre des moyens (1) disposés dans le véhicule automobile et le dispositif de sécurité (9), l'émetteur (12) pouvant être commuté au moyen d'au moins un élément de commande (18) et un accumulateur d'énergie (5) étant prévu dans le dispositif de sécurité (9) pour l'alimentation de l'émetteur (12), tandis que l'émetteur (12) ne peut pas être mis en fonction lorsque le dispositif de sécurité (9) est relié aux moyens (1) disposés dans le véhicule automobile, une tension de commutation, qui empêche une mise en fonction de l'émetteur (12), pouvant être déduite d'une tension servant à la transmission d'énergie dans le dispositif de sécurité (9) et une charge de l'accumulateur d'énergie (5) ayant lieu au moyen de la tension transmise, **caractérisé en ce que** les moyens disposés dans le véhicule automobile comprennent une première bobine (1) et le dispositif de sécurité (9) comprend une seconde bobine (2), la tension de commutation étant déduite d'une tension servant à la transmission d'énergie de la première bobine (1) à la seconde bobine (2) et induite dans celle-ci, tandis que la seconde bobine (2) constitue avec un condensateur (6) un circuit oscillant série.
